# EUROPEAN PATENT APPLICATION

(11) **EP 4 822 757 A1**
(43) Date of publication of application: **14.10.2026**
(21) Application number: 25874001.8
(22) Date of filing: 23.09.2025
(51) Int. Cl.: H01M 4/13, H01M 4/62, H01M 10/0562, H01M 4/36, H01M 4/04, H01M 4/139, H01M 10/052

(54) **ELECTRODE FOR ENERGY STORAGE DEVICE AND ENERGY STORAGE DEVICE COMPRISING SAME**

(30) Priority: 25.09.2024 KR 20240129544
(71) Applicant: LG Energy Solution, Ltd., Seoul 07335 (KR)
(72) Inventor: LEE, Choonghyeon, Daejeon 34122 (KR); KWON, Hyejin, Daejeon 34122 (KR); KIM, Myeongsoo, Daejeon 34122 (KR); CHOI, Seokin, Daejeon 34122 (KR); SONG, Min Sang, Daejeon 34122 (KR); OH, Kyungbae, Daejeon 34122 (KR); PARK, Mihui, Daejeon 34122 (KR); KANG, Sora, Daejeon 34122 (KR); LEE, Junho, Daejeon 34122 (KR)
(74) Representative: Goddar, Heinz J.
(86) International application number: PCT/KR2025/014871
(87) International publication number: WO 2026/071666

(57) **Abstract**

The present invention relates to an electrode for an energy storage device and an energy storage device including the same. More specifically, when manufacturing an electrode for an energy storage device by a dry process, the degree of fiberization of a binder may be controlled by changing calendering process conditions, thereby reducing the porosity of the electrode, improving tensile strength and interfacial resistance, and thus improving the energy density of the energy storage device.

## Description

### [TECHNICAL FIELD]

### Cross-Reference to Related Applications

This application claims the benefit of priority based on Korean Patent Application No. 10-2024-0129544 filed on September 25, 2024, and all contents disclosed in the above-identified Korean patent application are incorporated herein by reference in their entirety.

### Technical Field

The present invention relates to an electrode for an energy storage device and an energy storage device including the same.

### [BACKGROUND ART]

Various batteries are being studied from the viewpoints of capacity, safety, output, enlargement, and miniaturization of batteries in order to overcome the limits of current lithium secondary batteries.

Representative examples include a metal-air battery having a very large theoretical capacity in terms of capacity compared to lithium secondary batteries, an all-solid-state battery having no risk of explosion in terms of safety, a supercapacitor in terms of output, a NaS battery or a redox flow battery (RFB) in terms of enlargement, and a thin film battery in terms of miniaturization.

Among various next-generation batteries, an all-solid-state battery means a battery in which a liquid electrolyte used in conventional lithium secondary batteries is replaced with a solid electrolyte, and since a flammable solvent is not used in the battery, ignition or explosion due to a decomposition reaction of a conventional electrolyte solution does not occur at all, so that safety may be greatly improved. In addition, among all-solid-state batteries, technological development is continuing for sulfide-based all-solid-state batteries that have high ion conductivity of a solid electrolyte and may theoretically realize a high energy density of 900 Wh/L or more. At this time, the sulfide-based all-solid-state battery means an all-solid-state battery including a sulfide-based solid electrolyte.

In an all-solid-state battery system, lithium ion conduction by a liquid electrolyte included in a conventional lithium-ion battery (LIB) does not occur. Accordingly, when manufacturing a positive electrode for a sulfide-based all-solid-state battery, sulfide-based solid electrolyte particles having a small particle diameter should be added inside the positive electrode to increase a contact interface between the positive electrode active material and the sulfide-based solid electrolyte particles, thereby increasing the conduction of lithium ions. In addition, in order to improve the energy density, physical contact between the positive electrode active material, the sulfide-based solid electrolyte particles, and other elements in the positive electrode should be enhanced, and the porosity of the positive electrode after rolling should be reduced, which should be maintained even during charge and discharge.

Accordingly, a technology has been developed to introduce a fibrous binder into a positive electrode to increase and maintain a contact interface between a positive electrode active material and sulfide-based solid electrolyte particles. The fibrous binder may be formed when the binder is fiberized during manufacturing of the positive electrode by a dry process without using a solvent. Therefore, in order to obtain a fibrous binder, a binder that is easily fiberized may be introduced into the dry process, and for example, polytetrafluoroethylene (PTFE) is a binder that is easily fiberized.

However, there is a limit in reducing the porosity of a positive electrode for an all-solid-state battery only by simply introducing a fibrous binder into the positive electrode for an all-solid-state battery. Accordingly, there is a need for a technology for efficiently reducing porosity in an electrode for an all-solid-state battery into which a fibrous binder is introduced.

In addition, since an electrode into which a fibrous binder is introduced is not limited to an electrode for an all-solid-state battery but may be widely applied to electrodes for energy storage devices, there is a need to develop a technology for an electrode for an energy storage device including a fibrous binder having reduced porosity.

### [Prior Art Document]

(Patent Literature 1) U.S. Patent Publication No. 2024-0079574

### [DISCLOSURE OF THE INVENTION]

### [TECHNICAL PROBLEM]

As a result of conducting research from various angles to solve the above problems, the inventors of the present invention have confirmed that in an energy storage device including a fluorine-containing fibrous binder in an electrode, the porosity and tensile strength of the electrode are controlled according to the degree of fiberization of the fluorine-containing fibrous binder, so that the energy density of the energy storage device may be improved.

Therefore, an objective of the present invention is to provide an electrode for an energy storage device including a fluorine-containing fibrous binder having a controlled degree of fiberization.

In addition, another objective of the present invention is to provide a method for manufacturing an electrode for an energy storage device including a fluorine-containing fibrous binder having a controlled degree of fiberization.

In addition, another objective of the present invention is to provide an energy storage device including the electrode for an energy storage device including the fluorine-containing fibrous binder having a controlled degree of fiberization.

### [TECHNICAL SOLUTION]

In order to achieve the above objectives, the present invention provides an electrode for an energy storage device, comprising: an electrode active material layer including an electrode active material, a fluorine-containing fibrous binder, and a conductive material, wherein a relative degree of fiberization (A) of the electrode calculated by the following Equation 1 is 4 to 6. <Equation 1> 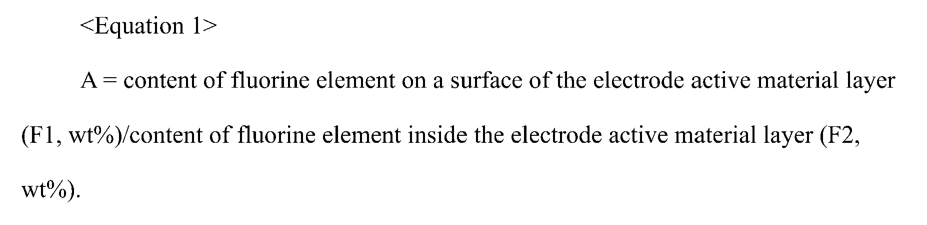 A = content of fluorine element on a surface of the electrode active material layer (F1, wt%)/content of fluorine element inside the electrode active material layer (F2, wt%).

In one embodiment of the present invention, there is provided an electrode for an energy storage device, wherein the fluorine-containing fibrous binder includes at least one selected from the group consisting of polytetrafluoroethylene (PTFE) and a copolymer including the same.

In one embodiment of the present invention, there is provided an electrode for an energy storage device, wherein the fluorine-containing fibrous binder is included in an amount of 0.1 to 10 wt% based on the total weight of the electrode active material layer.

In one embodiment of the present invention, there is provided an electrode for an energy storage device, wherein the electrode active material layer further includes a sulfide-based solid electrolyte.

In one embodiment of the present invention, there is provided an electrode for an energy storage device, wherein the electrode is a positive electrode, and the electrode active material layer is a positive electrode active material layer including a positive electrode active material, a fluorine-containing fibrous binder, and a conductive material.

In one embodiment of the present invention, there is provided an electrode for an energy storage device, wherein the porosity of the positive electrode active material layer is 11% to 15%.

In one embodiment of the present invention, there is provided an electrode for an energy storage device, wherein the positive electrode active material includes a surface coating layer.

In one embodiment of the present invention, there is provided an electrode for an energy storage device, wherein the surface coating layer includes a lithium ion conductive oxide.

In one embodiment of the present invention, there is provided an electrode for an energy storage device, wherein the lithium ion conductive oxide includes at least one selected from the group consisting of LiNbO₃, Li₄Ti₅O₁₂, and Li₃PO₄.

In one embodiment of the present invention, there is provided an electrode for an energy storage device, wherein the electrode is a negative electrode, and the electrode active material layer is a negative electrode active material layer including a negative electrode active material, a fluorine-containing fibrous binder, and a conductive material.

In one embodiment of the present invention, the electrode may be a dry electrode. The dry electrode means an electrode manufactured by a dry process without using a solvent.

The present invention also relates to a method for manufacturing an electrode for an energy storage device, the method comprising: (S1) mixing an electrode active material, a conductive material, and a fluorine-containing binder;
(S2) applying a shear force to the mixture obtained in the step (S1) to fiberize the fluorine-containing binder; and
(S3) performing a sheeting and calendering process using the mixture obtained in the step (S2) to obtain an electrode active material layer.

In one embodiment of the present invention, there is provided a method for manufacturing an electrode for an energy storage device, wherein a sulfide-based solid electrolyte is mixed together in the step (S1).

In one embodiment of the present invention, there is provided a method for manufacturing an electrode for an energy storage device, wherein the shear force is applied by an agitate mortar, ball milling, a kneader, or a roll press.

In one embodiment of the present invention, there is provided a method for manufacturing an electrode for an energy storage device, wherein the calendering process is performed 6 to 10 times.

In one embodiment of the present invention, there is provided a method for manufacturing an electrode for an energy storage device, wherein the calendering process is performed uniaxially or biaxially.

The present invention also provides an energy storage device including the electrode.

In one embodiment of the present invention, there is provided an energy storage device, wherein the energy storage device includes an all-solid-state battery.

### [ADVANTAGEOUS EFFECTS OF THE INVENTION]

According to the electrode for an energy storage device of the present invention, the degree of fiberization of the binder may be controlled by a calendering process during manufacturing of the electrode active material layer, so that the porosity of the electrode may be controlled, thereby improving the energy density of the energy storage device.

### [BRIEF DESCRIPTION OF THE DRAWINGS]

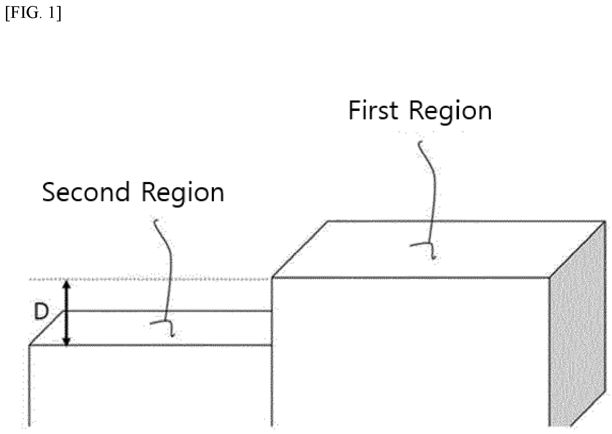

FIG. 1 is a schematic diagram of an electrode for explaining a relative degree of fiberization of an electrode according to one embodiment of the present invention.

### [BEST MODE FOR CARRYING OUT THE INVENTION]

Hereinafter, the present invention will be described in more detail to aid understanding of the present invention.

The terms or words used in the present specification and claims should not be construed as being limited to conventional or dictionary meanings, and should be construed as meanings and concepts consistent with the technical idea of the present invention, since the inventor may define the concept of terms appropriately in order to describe his or her own invention in the best way.

The term "Energy Storage Device (ESD)" used in the present specification means a device capable of storing and converting energy.

The term "degree of fiberization" used in the present specification means a degree of progression into a fibrous form. Specifically, it means that the greater the aspect ratio as the binder is fiberized, the greater the degree of fiberization.

The term "relative degree of fiberization of an electrode" used in the present specification means a relative ratio of the degree of fiberization of the fluorine-containing binder present on the surface of the electrode active material layer to the degree of fiberization of the fluorine-containing binder present inside the electrode active material layer. Inside and on the surface of the electrode active material layer, the fluorine-containing binder may exist as a fibrous binder in a fiberized form, or may exist in the form of secondary particles in which a plurality of primary particles are agglomerated. If a fluorine element is detected inside and on the surface of the electrode active material layer, it means that the binder exists as secondary particles. That is, the greater the content of the fluorine element, the less the fiberization of the binder progresses, which means that the binder exists more in the form of secondary particles. Therefore, the degree of fiberization of the binder may be confirmed by the content ratio of the fluorine element detected inside and on the surface of the electrode active material layer.

In addition, in the present specification, when the electrode is a positive electrode or a negative electrode, the "relative degree of fiberization of an electrode" may be referred to as the "relative degree of fiberization of a positive electrode" or the "relative degree of fiberization of a negative electrode," respectively.

### Electrode for Energy Storage Device

The present invention relates to an electrode for an energy storage device.

The electrode for an energy storage device according to the present invention includes an electrode active material layer including an electrode active material, a fluorine-containing fibrous binder, and a conductive material, wherein a relative degree of fiberization (A) of the electrode calculated by the following Equation 1 is 4 to 6. <Equation 1> 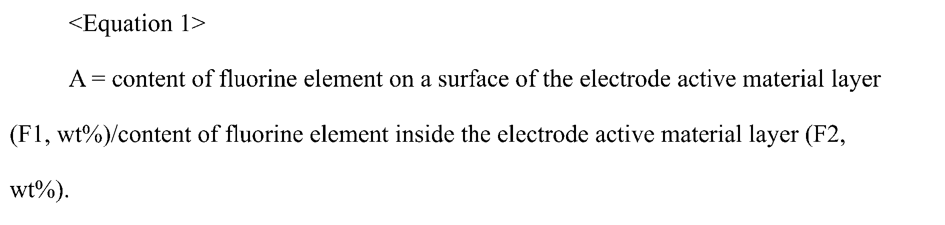 A = content of fluorine element on a surface of the electrode active material layer (F1, wt%)/content of fluorine element inside the electrode active material layer (F2, wt%).

The electrode may be a positive electrode or a negative electrode. When the electrode is a positive electrode, the positive electrode may include a positive electrode active material layer including a positive electrode active material. In addition, when the electrode is a negative electrode, the negative electrode may include a negative electrode active material layer including a negative electrode active material.

The electrode active material layer may include a fibrous binder formed by fiberization of a binder and a binder in the form of secondary particles that is not fiberized. The fibrous binder and the binder in the form of secondary particles may have different distributions inside and on the surface of the electrode active material layer. The distribution of the fibrous binder and the binder in the form of secondary particles may be determined by a dry process using a sheeting and calendering process. Since the physical properties of the electrode including them and the performance of the energy storage device vary depending on the distribution of the fibrous binder and the binder in the form of secondary particles, these distributions are defined as the relative degree of fiberization (A) of the electrode. Here, the secondary particles refer to particles formed by agglomeration of a plurality of primary particles that are single particles.

The relative degree of fiberization (A) of the electrode is preferably such that the degree of fiberization inside the electrode active material layer is greater than that on the surface of the electrode active material layer, which corresponds to a case where A > 1. More preferably, when 4 ≤ A ≤ 6 is satisfied, the tensile strength of the electrode may be strengthened while preventing an increase in resistance. Specifically, when the relative degree of fiberization (A) of the electrode is less than 4, it means that the fluorine-containing binder exists more in the form of secondary particles rather than in a fibrous form inside the electrode active material layer so that a large amount of internal fluorine element is detected, which means that the fiberization of the binder has not progressed much inside, and thus the tensile strength of the electrode may be reduced. In addition, when the relative degree of fiberization (A) of the electrode exceeds 6, it means that the fluorine-containing binder exists more in a fibrous form than in the form of secondary particles inside the electrode active material layer, which means that the fiberization of the binder has progressed significantly inside, so that the tensile strength of the electrode may increase, but the performance of the energy storage device may be reduced due to an increase in a resistance component caused by excessive fiberization. Specifically, the relative degree of fiberization (A) of the electrode may be 4 or more, 4.1 or more, 4.2 or more, 4.3 or more, 4.4 or more, 4.5 or more, 4.6 or more, 4.7 or more, 4.8 or more, 4.9 or more, or 5 or more, and 6 or less, 5.9 or less, 5.8 or less, 5.7 or less, 5.6 or less, 5.5 or less, 5.4 or less, 5.3 or less, 5.2 or less, or 5.1 or less.

The content of fluorine element on the surface of the electrode active material layer (F1, wt%) and the content of fluorine element inside the electrode active material layer (F2, wt%) may be measured by energy-dispersive X-ray spectroscopy (EDS). Specifically, (a) after analyzing the inside and the surface of the electrode active material layer by EDS, (b) the content of fluorine element on the surface of the electrode active material layer (F1, wt%) and the content of fluorine element inside the electrode active material layer (F2, wt%) may be measured.

FIG. 1 is a schematic diagram of an electrode for explaining a relative degree of fiberization of an electrode according to one embodiment of the present invention.

Referring to FIG. 1, a first region may correspond to the surface of the electrode active material layer, and a second region may correspond to the inside of the electrode active material layer.

The inside of the electrode active material layer means a portion of the electrode obtained by cutting a certain thickness (D) from the surface. For example, the certain thickness (D) may refer to a thickness corresponding to 20% to 40% based on the total thickness of the electrode. Specifically, the certain thickness (D) may be 20% or more, 21% or more, 22% or more, 23% or more, 24% or more, 25% or more, 26% or more, 27% or more, 28% or more, 29% or more, or 30% or more, and 40% or less, 39% or less, 38% or less, 37% or less, 36% or less, 35% or less, 34% or less, 33% or less, 32% or less, or 31% or less, based on the total thickness of the electrode.

In one embodiment of the present invention, the electrode active material layer may include a fluorine-containing fibrous binder. The fluorine-containing fibrous binder may be obtained by applying a shear force to a fluorine-containing binder during electrode manufacturing to fiberize the fluorine-containing binder.

The fluorine-containing fibrous binder may include at least one selected from the group consisting of polytetrafluoroethylene (PTFE) and a copolymer including the same. However, the fluorine-containing fibrous binder material is not limited thereto as long as its physical properties may be easily deformed and fiberized by a calendering process.

In addition, the fluorine-containing fibrous binder may be included in an amount of 0.1 to 10 wt% based on the total weight of the electrode active material layer. When the content of the fluorine-containing fibrous binder is less than 0.1 wt%, the effect of improving the binding force between materials included in the electrode active material layer may be insignificant and the tensile strength may be reduced, and when it exceeds 10 wt%, the ion conductivity or electrical conductivity of the electrode may be reduced. Specifically, the content of the fibrous binder may be 0.1 wt% or more, 0.5 wt% or more, 1 wt% or more, 2 wt% or more, 3 wt% or more, 4 wt% or more, or 5 wt% or more, and 10 wt% or less, 9 wt% or less, 8 wt% or less, 7 wt% or less, or 6 wt% or less.

In one embodiment of the present invention, the electrode active material layer may further include a sulfide-based solid electrolyte.

The sulfide-based solid electrolyte may include a compound represented by the following Chemical Formula 1:

<Chemical Formula 1> LiₐM_{b}SX_{c}

In Chemical Formula 1, M is selected from P, Sn, Sb, As, and Ge;
X is selected from Cl, Br, and I;
5≤a<7.5, 0.5<b<1.5, and 0.5<c<2.

In addition, the sulfide-based solid electrolyte may be included in an amount of 10 to 50 wt% based on the total weight of the electrode active material layer. Specifically, the content of the sulfide-based solid electrolyte may be 10 wt% or more, 20 wt% or more, or 30 wt% or more, and 50 wt% or less, 45 wt% or less, or 40 wt% or less. When the content of the sulfide-based solid electrolyte is less than 10 wt%, it may be insufficient to fill voids formed in the electrode active material layer, and thus it may be difficult to reduce the porosity of the electrode active material layer, and when it exceeds 50 wt%, the content of the electrode active material, the fluorine-containing fibrous binder, or the conductive material included in the electrode active material layer may be relatively reduced, and thus the performance of the energy storage device may be reduced.

In one embodiment of the present invention, the electrode may be a positive electrode, and the electrode active material layer may be a positive electrode active material layer including a positive electrode active material, a fluorine-containing fibrous binder, and a conductive material. The positive electrode active material layer may further include a sulfide-based solid electrolyte as described above.

In one embodiment of the present invention, the positive electrode active material is not particularly limited as long as it is a material capable of reversibly intercalating and deintercalating lithium ions. For example, the positive electrode active material may include lithium cobalt oxide (LiCoO₂), lithium nickel oxide (LiNiO₂), Li[NiₓCo_{y}Mn_{z}Mᵥ]O₂ (wherein M is any one selected from the group consisting of Al, Ga, and In or two or more elements thereof; 0.3≤x<1.0, 0≤y, z≤0.5, 0≤v≤0.1, x+y+z+v=1), Li(LiₐM_{b-a-b'}M'_{b'})O_{2-c}A_{c} (wherein 0≤a≤0.2, 0.6≤b≤1, 0≤b'≤0.2, 0≤c≤0.2; M includes Mn and at least one selected from the group consisting of Ni, Co, Fe, Cr, V, Cu, Zn, and Ti; M' is at least one selected from the group consisting of Al, Mg, and B, and A is at least one selected from the group consisting of P, F, S, and N). Examples include layered compounds such as those described above or compounds substituted with one or more transition metals; lithium manganese oxides such as Li_{1+y}Mn_{2-y}O₄ (wherein y is 0 to 0.33), LiMnO₃, LiMn₂O₃, LiMnO₂; lithium copper oxide (Li₂CuO₂); vanadium oxides such as LiV₃O₈, LiFe₃O₄, V₂O₅, Cu₂V₂O₇; Ni site-type lithium nickel oxides represented by the formula LiNi_{1-y}M_{y}O₂ (wherein M=Co, Mn, Al, Cu, Fe, Mg, B, or Ga, and y is 0.01 to 0.3); lithium manganese composite oxides represented by the formula LiMn_{2-y}M_{y}O₂ (wherein M is Co, Ni, Fe, Cr, Zn, or Ta, and y is 0.01 to 0.1) or Li₂Mn₃MO₈ (wherein M is Fe, Co, Ni, Cu, or Zn); LiMn₂O₄ in which a part of Li in the formula is substituted with alkaline earth metal ions; disulfide compounds; Fe₂(MoO₄)₃; and the like, but is not limited thereto.

In addition, the positive electrode active material may be included in an amount of 55 to 90 wt% based on the total weight of the positive electrode active material layer. Specifically, the content of the positive electrode active material may be 55 wt%, 60 wt% or more, or 65 wt% or more, and 83 wt% or less, 85 wt% or less, or 90 wt% or less. When the content of the positive electrode active material is less than 55 wt%, the performance of the energy storage device may be reduced, and when it exceeds 90 wt%, the mass transfer resistance may be increased.

In addition, the positive electrode active material may include a surface coating layer. The surface coating layer may include a lithium ion conductive oxide. When a surface coating layer including a lithium ion conductive oxide is formed on the surface of the positive electrode active material, direct contact between the positive electrode active material and the sulfide-based solid electrolyte may be prevented, thereby preventing a decomposition reaction of the sulfide-based solid electrolyte.

The lithium ion conductive oxide may include at least one selected from the group consisting of LiNbO₃, Li₄Ti₅O₁₂, and Li₃PO₄. In addition, the lithium ion conductive oxide may be amorphous or crystalline. In addition, a method of forming the surface coating layer including the lithium ion conductive oxide may be spray coating, dipping, or the like, but is not limited thereto, and various methods capable of forming a coating layer on the surface of the positive electrode active material may be used.

In one embodiment of the present invention, the conductive material is not particularly limited as long as it prevents side reactions in the internal environment of the energy storage device and has excellent electrical conductivity without causing chemical changes in the energy storage device, and typically graphite or conductive carbon may be used, for example, graphite such as natural graphite and artificial graphite; carbon black such as carbon black, acetylene black, ketjen black, denka black, thermal black, channel black, furnace black, lamp black, and summer black; carbon-based materials having a graphene or graphite crystal structure; conductive fibers such as carbon fibers and metal fibers; carbon fluoride; metal powders such as aluminum powder and nickel powder; conductive whiskers such as zinc oxide and potassium titanate; conductive oxides such as titanium oxide; and conductive polymers such as polyphenylene derivatives; which may be used alone or in combination of two or more thereof, but are not necessarily limited thereto. Preferably, the conductive material may include carbon nano fiber (CNF) or vapor-grown carbon fiber (VGCF).

The conductive material may be typically included in an amount of 0.05 wt% to 10 wt% based on the total weight of the positive electrode active material layer. Specifically, the content of the conductive material may be 0.05 wt% or more, 0.1 wt% or more, 0.5 wt% or more, 1 wt% or more, 1.5 wt% or more, 2 wt% or more, 2.5 wt% or more, 3 wt% or more, 3.5 wt% or more, 4 wt% or more, 4.5 wt% or more, or 5 wt% or more, and 10 wt% or less, 9.5 wt% or less, 8 wt% or less, 7.5 wt% or less, 6 wt% or less, 6.5 wt% or less, or 6 wt% or less. When the content of the conductive material is too small, less than 0.05 wt%, it may be difficult to expect an effect of improving electrical conductivity or the electrochemical characteristics of the energy storage device may be reduced, and when it is too large, exceeding 10 wt%, the amount of the positive electrode active material may be relatively reduced, thereby reducing the capacity and energy density. A method of including the conductive material in the positive electrode is not greatly limited, and conventional methods known in the art, such as mixing with the positive electrode active material and coating, may be used.

In one embodiment of the present invention, as described above, the positive electrode active material layer has reduced porosity, reduced thickness, improved tensile strength, and reduced interfacial resistance according to the relative degree of fiberization (A) of the positive electrode.

The porosity of the positive electrode active material layer may be 11% to 15%. When the porosity exceeds 15%, the energy density of the energy storage device may be reduced. Specifically, the porosity may be 11% or more, 11.1% or more, 11.2% or more, 11.3% or more, 11.4% or more, 11.5% or more, 11.6% or more, 11.7% or more, 11.8% or more, 11.9% or more, 12% or more, 12.1% or more, 12.2% or more, 12.3% or more, 12.4% or more, 12.5% or more, 12.6% or more, 12.7% or more, 12.8% or more, 12.9% or more, or 13% or more, and 15% or less, 14.9% or less, 14.8% or less, 14.7% or less, 14.6% or less, 14.5% or less, 14.4% or less, 14.3% or less, 14.2% or less, 14.2% or less, 14.1% or less, or 14% or less. The porosity may refer to a volume (vol%) of pores relative to a total volume of the positive electrode active material layer. In addition, when the positive electrode active material layer itself is used as a positive electrode without using the positive electrode current collector, the porosity of the positive electrode active material layer may refer to the porosity of the positive electrode.

In addition, the thickness of the positive electrode including the positive electrode active material layer after rolling may be 120 µm or less. When the thickness exceeds 120 µm, the energy density of the energy storage device utilizing the positive electrode may be reduced. Specifically, the thickness may be 120 µm or less, 115 µm or less, 110 µm or less, 105 µm or less, 100 µm or less, 95 µm or less, 90 µm or less, 85 µm or less, or 80 µm or less. Although the lower limit of the thickness is not particularly limited, it may be 50 µm or more, 55 µm or more, 60 µm or more, or 65 µm or more.

In addition, the interfacial resistance may be 60 ohm·cm² or less. When the interfacial resistance exceeds 60 ohm·cm², the electrical conductivity within the positive electrode may be reduced and the charge/discharge performance may be decreased. Specifically, the interfacial resistance may be 60 ohm·cm² or less, 55 ohm·cm² or less, 50 ohm·cm² or less, 45 ohm·cm² or less, 40 ohm·cm² or less, 35 ohm·cm² or less, or 30 ohm·cm² or less. Although the lower limit of the interfacial resistance is not particularly limited, it may be greater than 0 ohm·cm², 5 ohm·cm² or more, or 10 ohm·cm² or more.

In one embodiment of the present invention, the positive electrode current collector supports the positive electrode active material layer and serves to transfer electrons between an external wire and the positive electrode active material layer.

The positive electrode current collector is not particularly limited as long as it has high electron conductivity without causing chemical changes in the energy storage device. For example, the positive electrode current collector may be stainless steel, aluminum, nickel, titanium, palladium, calcined carbon, stainless steel surface-treated with carbon, nickel, silver, or the like, an aluminum-cadmium alloy, or the like.

The positive electrode current collector may have a fine uneven structure on the surface of the positive electrode current collector or may employ a three-dimensional porous structure in order to strengthen the bonding force with the positive electrode active material layer. Accordingly, the positive electrode current collector may include various forms such as a film, a sheet, a foil, a mesh, a net, a porous body, a foam body, and a nonwoven fabric body.

In one embodiment of the present invention, the electrode may be a negative electrode, and the electrode active material layer may be a negative electrode active material layer including a negative electrode active material, a fluorine-containing fibrous binder, and a conductive material. The negative electrode active material layer may further include a sulfide-based solid electrolyte as described above. In addition, the negative electrode active material layer may be formed on one surface of a negative electrode current collector.

In addition, in the negative electrode active material layer, the negative electrode active material may include a material capable of reversibly intercalating or deintercalating lithium (Li⁺), a material capable of reversibly forming a lithium-containing compound by reacting with lithium ions (Li⁺), lithium metal or a lithium alloy.

The material capable of reversibly intercalating or deintercalating lithium ions (Li⁺) may be, for example, crystalline carbon, amorphous carbon, or a mixture thereof. The material capable of reversibly forming a lithium-containing compound by reacting with lithium ions (Li⁺) may be, for example, tin oxide, titanium nitrate, or silicon. The lithium alloy may be, for example, an alloy of lithium (Li) with a metal selected from the group consisting of indium (In), sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be lithium metal or a lithium-indium alloy (Li-In), and specifically, may be lithium metal or a lithium film or a lithium-indium alloy film or powder.

The negative electrode active material may be included in an amount of 40 to 80 wt% based on the total weight of the negative electrode active material layer. Specifically, the content of the negative electrode active material may be 40 wt% or more, 45 wt% or more, or 50 wt% or more, and 80 wt% or less, 75 wt% or less, or 70 wt% or less. When the content of the negative electrode active material is less than 40 wt%, the connectivity between materials inside the negative electrode active material layer may be insufficient, and when it exceeds 80 wt%, the mass transfer resistance may be increased.

In addition, the fluorine-containing fibrous binder is a component that assists in binding the negative electrode active material and the conductive material and in binding to the negative electrode current collector, and the material and content of the fluorine-containing fibrous binder may be the same as those of the fluorine-containing fibrous binder included in the positive electrode active material layer described above.

In addition, the conductive material is not particularly limited as long as it prevents side reactions in the internal environment of the energy storage device and has excellent electrical conductivity without causing chemical changes in the energy storage device, and typically graphite or conductive carbon may be used, for example, graphite such as natural graphite and artificial graphite; carbon black such as carbon black, acetylene black, ketjen black, denka black, thermal black, channel black, furnace black, lamp black, and summer black; carbon-based materials having a graphene or graphite crystal structure; conductive fibers such as carbon fibers and metal fibers; carbon fluoride; metal powders such as aluminum powder and nickel powder; conductive whiskers such as zinc oxide and potassium titanate; conductive oxides such as titanium oxide; and conductive polymers such as polyphenylene derivatives; which may be used alone or in combination of two or more thereof, but are not necessarily limited thereto. Preferably, the conductive material may include vapor-grown carbon fiber (VGCF).

The conductive material may be typically included in an amount of 1 wt% to 5 wt% based on the total weight of the negative electrode active material layer, and specifically, the content of the conductive material may be 1 wt% or more, 1.5 wt% or more, or 2 wt% or more, and 5 wt% or less, 4.5 wt% or less, or 4 wt% or less. When the content of the conductive material is too small, less than 1 wt%, it may be difficult to expect an effect of improving electrical conductivity or the electrochemical characteristics of the energy storage device may be reduced, and when it is too large, exceeding 5 wt%, the amount of the negative electrode active material may be relatively reduced, thereby reducing the capacity and energy density. A method of including the conductive material in the negative electrode is not greatly limited, and conventional methods known in the art, such as mixing with the negative electrode active material and coating, may be used.

In addition, the negative electrode current collector is not particularly limited as long as it has conductivity without causing chemical changes in the energy storage device, and for example, the negative electrode current collector may be copper, stainless steel, aluminum, nickel, titanium, calcined carbon, copper or stainless steel surface-treated with carbon, nickel, titanium, silver, or the like, an aluminum-cadmium alloy, or the like. In addition, the negative electrode current collector may be used in various forms such as a film, a sheet, a foil, a net, a porous body, a foam body, and a nonwoven fabric body having fine irregularities formed on the surface, similarly to the positive electrode current collector.

In addition, in the negative electrode, the porosity, thickness, and tensile strength may be the same as the porosity, thickness, and tensile strength of the positive electrode.

In one embodiment of the present invention, the electrode active material layer may be solvent-free. That is, the electrode active material layer may be manufactured by a solvent-free process without using a solvent.

Since the electrode active material layer does not use a solvent in the manufacturing process, a phenomenon in which the crystal structure of the sulfide-based solid electrolyte is destroyed by the solvent and the ion conductivity is reduced may be prevented.

### Method for Manufacturing Electrode for Energy Storage Device

The present invention also relates to a method for manufacturing an electrode for an energy storage device.

The method for manufacturing an electrode for an energy storage device according to the present invention includes: (S1) mixing an electrode active material, a conductive material, and a fluorine-containing binder; (S2) applying a shear force to the mixture obtained in the step (S1) to fiberize the fluorine-containing binder; and (S3) performing a sheeting and calendering process using the mixture obtained in the step (S2) to obtain an electrode active material layer. When the manufactured electrode active material layer is in a free-standing form, it may be used as an electrode such as a positive electrode or a negative electrode by itself. However, when the electrode active material layer is not in a free-standing form, the method may further include, as a step (S4), attaching the film-form electrode active material layer obtained in the step (S3) to an electrode current collector to manufacture an electrode for an energy storage device.

The specific materials, physical properties, and contents of the positive electrode active material, the negative electrode active material, the sulfide-based solid electrolyte, the conductive material, and the fluorine-containing binder used in the method for manufacturing an electrode for an energy storage device according to the present invention are the same as those described above. The fluorine-containing binder means a raw material of the fluorine-containing fibrous binder included in the electrode.

In the step (S1) of the method for manufacturing an electrode for an energy storage device according to the present invention, an electrode active material, a conductive material, and a fluorine-containing binder may be mixed. In addition, a sulfide-based solid electrolyte may be mixed together in the step (S1).

The electrode active material, the sulfide-based solid electrolyte, the conductive material, and the fluorine-containing binder used as raw materials are all in powder form, and they may be uniformly mixed in consideration of processability and product reliability. The mixing method is not particularly limited as long as it is a method capable of uniformly mixing materials in powder form.

In the step (S2) of the method for manufacturing an electrode for an energy storage device according to the present invention, a shear force may be applied to the mixture obtained in the step (S1) to fiberize the fluorine-containing binder.

The fluorine-containing binder included in the mixture may be physically deformed and fiberized due to the shear force. As described above, the fluorine-containing binder used as a raw material may have physical properties that may be easily deformed physically. In addition, in order to apply a shear force to the mixture, the mixture may be introduced into a mortar, ball milling, a kneader, or a roll press to perform physical mixing. During the physical mixing, the fluorine-containing binder may undergo physical deformation and be fiberized by being rubbed with powder particles in the mixture due to the shear force applied to the fluorine-containing binder.

In the step (S3) of the method for manufacturing an electrode for an energy storage device according to the present invention, a sheeting and calendering process may be performed using the mixture obtained in the step (S2) to obtain an electrode active material layer. At this time, the mixture obtained in the step (S2) may be used as is, or the mixture may be pulverized and used.

The sheeting process is a step of initially forming the mixture including the fiberized binder in the step (S1) into a film form. In addition, the calendering process may additionally roll the film-form molded product to control the degree of fiberization of the binder and control the porosity, thickness, or tensile strength of the electrode active material layer. In addition, the electrode active material layer may be molded into a film form in which physical properties such as the degree of fiberization of the fluorine-containing binder, porosity, thickness, or tensile strength are controlled due to the sheeting and calendering processes.

In one embodiment of the present invention, the calendering process allows control of the porosity, thickness, and tensile strength of the electrode active material layer. The calendering process means a process in which a process object is passed between two rollers.

The calendering process may be performed 6 to 10 times. At this time, the number of times of the calendering process may refer to the number of times the process object passes between the two rollers. When the number of times of the calendering process is less than 6 times, the effect of reducing the thickness and porosity of the electrode active material layer and the effect of improving the tensile strength may be insignificant, and when it exceeds 10 times, the processability may be reduced. Specifically, the process may be 6 times or more or 7 times or more, and 10 times or less, 9 times or less, or 8 times or less.

In one embodiment of the present invention, the orientation of the calendering process may be performed uniaxially or biaxially. At this time, uniaxial means that calendering is performed in one direction, and biaxial means that calendering is performed alternately in a direction perpendicular to a horizontal surface of the electrode active material layer after performing calendering in one direction.

When the calendering process is performed uniaxially, the fiberization of the binder has directionality. On the other hand, when the calendering process is performed biaxially, the fiberization of the binder may have various directionalities uniformly, so that the strength difference depending on the direction may be reduced.

When the electrode active material layer manufactured by the calendering process is in a free-standing form, the electrode active material layer itself may serve as an electrode such as a positive electrode or a negative electrode without a separate current collector.

In the method for manufacturing an electrode for an energy storage device according to the present invention, when the electrode active material layer is not in a free-standing form, as the step (S4), the film-form electrode active material layer obtained in the step (S3) may be attached to an electrode current collector.

The types and physical properties of the electrode current collector, that is, the positive electrode current collector and the negative electrode current collector, are the same as those described above.

### Energy Storage Device

The present invention also relates to an energy storage device including the electrode.

In one embodiment of the present invention, the energy storage device may include the positive electrode, the negative electrode, a separator interposed therebetween, and an electrolyte. The electrolyte may be a liquid electrolyte. The lithium secondary battery may include a lithium ion secondary battery, a lithium-sulfur secondary battery, or a lithium-air secondary battery.

In one embodiment of the present invention, the energy storage device may include the positive electrode, the negative electrode, and a solid electrolyte membrane interposed therebetween. The negative electrode may include a negative electrode active material layer as described above, or may include a negative electrodeless layer. The solid electrolyte membrane may be a sulfide-based solid electrolyte membrane. The energy storage device may be an all-solid-state battery.

The negative electrodeless layer means a negative electrode layer in which a lithium metal or a lithium alloy that may serve as a lithium supply source among the negative electrode active materials does not exist in the negative electrode during initial assembly of the battery, and lithium is deposited in the negative electrode by charging. The battery including the negative electrodeless layer may be referred to as a negative electrode-free battery.

In the negative electrode-free battery, lithium ions released from the positive electrode move to the negative electrode during charge and discharge of the battery to form a negative electrode active material layer. For example, during charging of the battery, lithium ions are desorbed from the positive electrode active material and then move to the negative electrode side to become lithium metal consisting purely of lithium, thereby forming a lithium metal layer in a layer form on the negative electrode current collector, or forming a lithium metal structure in an arbitrary form that is not in a layer form. The arbitrary form may be, for example, a structure in which lithium metal is aggregated in a particle form.

In one embodiment of the present invention, the sulfide-based solid electrolyte included in the sulfide-based solid electrolyte membrane may be represented by the following Chemical Formula 1:

<Chemical Formula 1> LiₐM_{b}SX_{c}

In Chemical Formula 1, M is selected from P, Sn, Sb, As, and Ge;
X is selected from Cl, Br, and I;
5≤a<7.5, 0.5<b<1.5, 0.5<c<2.

However, the sulfide-based solid electrolyte is not limited thereto, and sulfide-based solid electrolytes commonly used in the art may be widely used.

### Battery Module

The present invention also relates to a battery module including the all-solid-state battery as a unit cell, a battery pack including the battery module, and a device including the battery pack as a power source.

At this time, specific examples of the device include power tools that move by being powered by an electric motor; electric vehicles (EV), hybrid electric vehicles (HEV), and plug-in hybrid electric vehicles (PHEV); electric bicycles (E-bike), electric scooters (E-scooter), electric golf carts, and electric trucks; and other electric power storage systems.

Hereinafter, preferred embodiments are presented to aid understanding of the present invention, but the following examples are merely illustrative of the present invention, and it will be apparent to those skilled in the art that various modifications and variations may be made within the scope and technical spirit of the present invention, and such modifications and variations are also included within the scope of the appended claims.

In the following Examples and Comparative Examples, positive electrodes and all-solid-state batteries including the same were manufactured according to the composition of the positive electrode active material layer and the calendering process conditions as shown in Table 1 below.

**[Table 1]**

| | Calendering Process |
|---|---|
| | Times |
| Example 1 | 6 |
| Comp. Ex. 1 | 0 |
| Comp. Ex. 2 | 3 |

### Example 1

### 1-1. Manufacturing of Positive electrode

LiNi_{0.8}Co_{0.1}Mn_{0.1}O₂ (NCM 811) as a positive electrode active material, Li₆PS₅Cl as a sulfide-based solid electrolyte, VGCF as a conductive material, and polytetrafluoroethylene (PTFE) as a binder were prepared.

The positive electrode active material, the sulfide-based solid electrolyte, the conductive material, and the binder were powder-mixed in a weight ratio of 78:19.5:1.5:1. Specifically, the positive electrode active material and the sulfide-based solid electrolyte were weighed in powder form and mixed with a blade mixer in a dry-room environment. Thereafter, the conductive material was weighed and added, followed by additional mixing. Thereafter, the binder was weighed and added, and further mixing was performed to obtain a mixture.

The mixture was introduced into an agitate mortar, and the binder included in the mixture was fiberized using the agitate mortar. Thereafter, the mixture was passed between two rollers to perform a sheeting process, and then was rolled through a calendering process to obtain a film-type positive electrode active material layer. The calendering process was performed six (6) times.

### Comparative Example 1

A positive electrode was manufactured in the same manner as in Example 1, except that the calendering process was not performed after the sheeting process.

### Comparative Example 2

A positive electrode was manufactured in the same manner as in Example 1, except that the calendering process was performed 3 times after the sheeting process.

### Experimental Example 1: Evaluation of Positive electrode Physical Properties

The physical properties of the positive electrode according to the number of times of the calendering process during the positive electrode manufacturing process were evaluated.

### (1) Relative Degree of Fiberization of Positive electrode

The relative degree of fiberization of the positive electrode was calculated by the following Equation 1. The electrode of Equation 1 corresponds to a case where the electrode is a positive electrode. When the relative degree of fiberization of the positive electrode calculated by the following Equation 1 is in the range of 4 to 6, the degree of fiberization of the binder present inside and on the surface of the positive electrode is controlled to be in an optimal range, so that the energy density of the all-solid-state battery may be improved. <Equation 1> 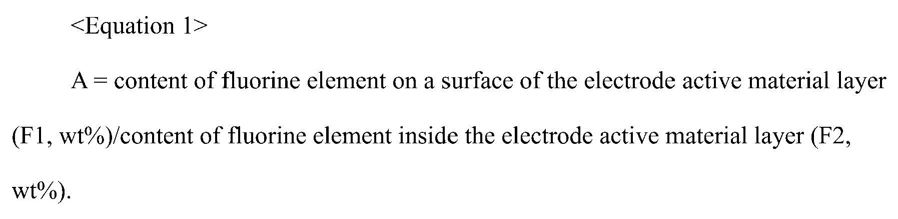 A = content of fluorine element on a surface of the electrode active material layer (F1, wt%)/content of fluorine element inside the electrode active material layer (F2, wt%).

The content of fluorine element on the surface of the positive electrode active material layer (F1, wt%) and the content of fluorine element inside the positive electrode active material layer (F2, wt%) were measured by energy-dispersive X-ray spectroscopy (EDS).

At this time, the inside means a portion obtained by cutting a thickness corresponding to 40% of the total thickness of the positive electrode active material layer from the surface. Since the positive electrode active material layer is in a free-standing form, the thickness of the positive electrode active material layer may correspond to the thickness of the positive electrode.

### (2) Porosity

The positive electrode porosity was calculated using the following Equation 2. <Equation 2> 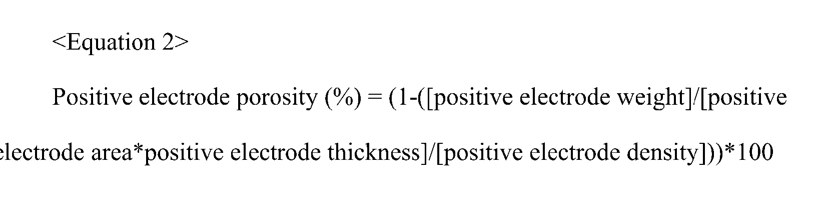 Positive electrode porosity (%) = (1-([positive electrode weight]/[positive electrode area*positive electrode thickness]/[positive electrode density]))*100

### (3) Tensile Strength

According to the ASTM D638 standard, the positive electrode was cut into a dog bone-shaped specimen. The cut specimen was pulled at a speed of 5 mm/min using a UTM (Universal testing machine) to measure the tensile strength.

### (4) Interfacial Resistance

After punching the positive electrode into a certain size, it was faced with a current collector, packaged, and subjected to WIP (Warm Isostatic Press). Thereafter, the positive electrode laminated with the current collector inside the packaging material was collected, and its resistance was measured using an electrode resistance measurement system (RM2610, Hioki), and then it was separated to observe the interfacial resistance.

Table 2 below shows the results of measuring the physical properties of the positive electrode according to the number of times of the calendering process.

**[Table 2]**

| | | Example 1 | Comp. Ex. 1 | Comp. Ex. 2 |
|---|---|---|---|---|
| Relative Degree of Fiberization of Positive electrode | | 5.5 | 1.07 | 3.3 |
| Before Rolling | Positive electrode Thickness (µm) | 156 | 312 | 197 |
| | Porosity (%) | 36.7 | 32.7 | 34.8 |
| After Rolling | Positive electrode Thickness (µm) | 114 | 270 | 149 |
| | Porosity (%) | 14.6 | 22.5 | 16.1 |
| Tensile Strength (MPa) | | 0.211 | 0.180 | 0.193 |
| Interfacial Resistance (ohm·cm²) | | 55 | 93 | 62 |

As shown in Table 2 above, in the case of Example 1 in which the calendering process was performed an appropriate number of times, the relative degree of fiberization of the positive electrode increased, the thickness decreased, the porosity decreased, the tensile strength increased, and the resistance decreased compared to Comparative Examples 1 and 2.

## Claims

1. An electrode for an energy storage device, comprising:
an electrode active material layer comprising an electrode active material, a fluorine-containing fibrous binder, and a conductive material,
wherein a relative degree of fiberization (A) of the electrode calculated by the following Equation 1 is 4 to 6: <Equation 1> 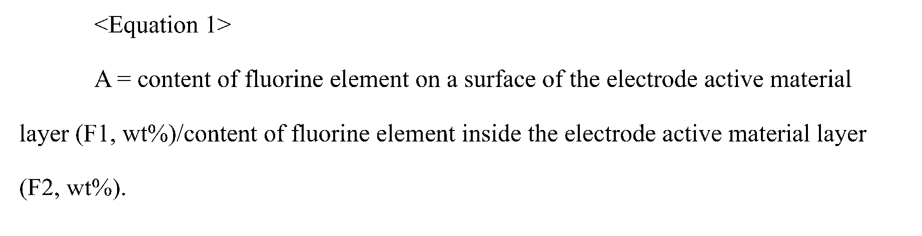 A = content of fluorine element on a surface of the electrode active material layer (F1, wt%)/content of fluorine element inside the electrode active material layer (F2, wt%).

2. The electrode for an energy storage device according to claim 1,
wherein the fluorine-containing fibrous binder comprises at least one selected from the group consisting of polytetrafluoroethylene (PTFE) and a copolymer comprising the same.

3. The electrode for an energy storage device according to claim 1,
wherein the fluorine-containing fibrous binder is included in an amount of 0.1 to 10 wt% based on a total weight of the electrode active material layer.

4. The electrode for an energy storage device according to claim 1,
wherein the electrode active material layer further comprises a sulfide-based solid electrolyte.

5. The electrode for an energy storage device according to claim 1,
wherein the electrode is a positive electrode, and
the electrode active material layer is a positive electrode active material layer including a positive electrode active material, a fluorine-containing fibrous binder, and a conductive material.

6. The electrode for an energy storage device according to claim 5,
wherein a porosity of the positive electrode active material layer is 11% to 15%.

7. The electrode for an energy storage device according to claim 5,
wherein the positive electrode active material includes a surface coating layer.

8. The electrode for an energy storage device according to claim 7,
wherein the surface coating layer comprises a lithium ion conductive oxide.

9. The electrode for an energy storage device according to claim 8,
wherein the lithium ion conductive oxide comprises at least one selected from the group consisting of LiNbO₃, Li₄Ti₅O₁₂, and Li₃PO₄.

10. The electrode for an energy storage device according to claim 1,
wherein the electrode is a negative electrode, and
the electrode active material layer is a negative electrode active material layer including a negative electrode active material, a fluorine-containing fibrous binder, and a conductive material.

11. A method for manufacturing an electrode for an energy storage device, the method comprising:
(S1) mixing an electrode active material, a conductive material, and a fluorine-containing binder;
(S2) applying a shear force to a mixture obtained in the step (S1) to fiberize the fluorine-containing binder; and
(S3) performing a sheeting and calendering process using the mixture obtained in the step (S2) to obtain an electrode active material layer.

12. The method for manufacturing an electrode for an energy storage device according to claim 11,
wherein a sulfide-based solid electrolyte is mixed together in the step (S1).

13. The method for manufacturing an electrode for an energy storage device according to claim 11,
wherein the shear force is applied by an agitate mortar, ball milling, a kneader, or a roll press.

14. The method for manufacturing an electrode for an energy storage device according to claim 11,
wherein the calendering process is performed 6 to 10 times.

15. An energy storage device comprising the electrode according to claim 1.

16. The energy storage device according to claim 15,
wherein the energy storage device comprises an all-solid-state battery.
